# FASCICULE DE BREVET EUROPEEN

(11) **EP 2 116 467 B1**
(45) Date de publication et mention de la délivrance du brevet: **02.05.2012**
(21) Numéro de dépôt: 09159372.3
(22) Date de dépôt: 05.05.2009
(51) Int. Cl.: B64C 9/24

(54) **Aile d'aéronef comprenant un volet mobile de bord d'attaque équipé d'un rail suiveur contraint en déplacement selon une trajectoire en arc de cercle**
Luftfahrzeugflügel, der eine verstellbare Klappe an der Vorderkante umfasst, die mit einer zur Bewegung auf einem Kreisbogen zwingenden Führungsschiene ausgestattet ist
Aircraft wing comprising a leading edge mobile flap shutter equipped with a follow-up rail with movement restricted according to an arc of circle trajectory

(30) Priorité: 06.05.2008 BE 200800259
(43) Date de publication de la demande: 11.11.2009
(73) Titulaire: Sonaca S.A., 6041 Gosselies (BE)
(72) Inventeur: Hautecoeur, Michel, 1341 Ceroux-Mousty (BE); Gonze, Albert-Paul, 6120 Nalinnes (BE); Suleau, Marcel, 6210 Les Bons Villers (BE)
(74) Mandataire: Ilgart, Jean-Christophe

(56) Documents cités:
- EP-A- 0 818 387
- EP-B- 0 728 101
- WO-A-2008/110521
- US-A- 4 470 569
- US-A- 4 650 140

## Description

### DOMAINE TECHNIQUE

La présente invention se rapporte de façon générale au domaine des ailes d'aéronef, du type comprenant un corps central fixe d'aile portant un ou plusieurs volets mobiles de bord d'attaque, chacun destiné à être déplacé en rotation par rapport au corps central fixe.

### ETAT DE LA TECHNIQUE ANTERIEURE

Sur les aéronefs, chacune des deux ailes de la voilure est généralement équipée de volets mobiles hypersustentateurs montés au bord d'attaque et au bord de fuite de l'aile.

De façon connue, les volets sont déployés pour les phases d'atterrissage et de décollage afin d'augmenter la portance à faible ou moyenne vitesse. Par ailleurs, en vol de croisière à grande vitesse, les volets mobiles sont rentrés pour limiter la résistance à l'avancement de l'aéronef. De plus, toujours de façon connue de l'homme du métier, le déplacement de chaque volet s'effectue à l'aide de moyens logés essentiellement dans une partie avant ou arrière d'un corps central fixe d'aile, tel que cela est notamment connu du document EP 0 818 387. Ces moyens permettent de déplacer chaque volet mobile de bord d'attaque selon une trajectoire en arc de cercle par rapport au corps central fixe d'aile, entre une position rentrée dans laquelle le volet épouse sensiblement le corps fixe, et une position déployée dans laquelle ce volet est déplacé vers l'avant.

Plus précisément, comme cela ressort du document EP 0 818 387, chaque volet mobile de bord d'attaque est équipé d'un dispositif assurant sa mise en mouvement, ce dispositif comprenant un premier et un second rails d'entraînement espacés selon une direction d'envergure de l'aile, et comprenant chacun une extrémité avant raccordée au volet mobile. Ces deux rails d'entraînement sont couplés à des moyens de mise en mouvement, par exemple du type arbre de commande portant des pignons entraînés en rotation et coopérant respectivement avec des crémaillères prévues sur les rails d'entraînement. Les moyens de mise en mouvement sont classiquement logés dans la partie avant du corps central fixe d'aile.

En outre, il est prévu des moyens de guidage associés à chacun des premier et second rails d'entraînement, également rapportés sur le corps central fixe, et conçus de manière à contraindre chacun des premier et second rails en déplacement, selon une trajectoire en arc de cercle centrée sur l'axe de rotation de volet, lorsque ceux-ci sont mis en mouvement par les moyens de mise en mouvement précités.

Typiquement, ces moyens de guidage comprennent des systèmes à galet(s) logés dans la partie avant du corps central fixe d'aile, ces galets étant donc agencés de manière à guider les rails le long de la trajectoire désirée.

Bien que cette configuration soit très répandue sur les ailes d'aéronef, elle présente néanmoins un inconvénient non négligeable, résidant dans l'apparition d'une rupture de contact, également dénommée fente ou désaffleurement, entre le bord de fuite du volet mobile de bord d'attaque et la partie avant du corps central fixe. Cette fente est particulièrement préjudiciable pendant la phase de décollage de l'aéronef, au cours de laquelle le volet mobile occupe une position dite position intermédiaire de décollage. En effet, alors qu'il est recherché le meilleur écoulement aérodynamique possible autour du volet et de l'aile durant cette phase de décollage, la présence de la fente engendre au contraire des perturbations aérodynamiques conséquentes, se traduisant par des pertes de performances globales de l'aéronef.

La fente a été identifiée comme provenant essentiellement de la déformation différentielle du corps central de l'aile et de son volet mobile, sous l'effet des charges aérodynamiques s'appliquant sur ces éléments. L'amplitude de cette fente est alors maximale dans une zone médiane du volet mobile entre les deux rails d'entraînement, et minimale voire nulle au niveau de ces deux rails d'entraînement maintenant correctement le volet en position, et limitant sa déformation.

Aucune solution de l'art antérieur ne propose de résoudre ce problème de rupture de contact entre le bord de fuite du volet mobile de bord d'attaque et la partie avant du corps central fixe, pendant la phase de décollage de l'aéronef. Au contraire, dans le document EP 0 728 101, il est proposé d'adjoindre un système auxiliaire entre les deux systèmes d'entraînement du volet espacés selon la direction d'envergure, ce système auxiliaire ayant pour but principal de créer une telle rupture lorsque le volet occupe sa position déployée. A titre indicatif, le système auxiliaire comprend un bras suiveur raccordé à son extrémité avant au volet mobile de bord d'attaque, et présentant une extrémité arrière équipée d'un unique galet formant point de pivotement, coulissant dans une rampe logée au sein du corps central fixe de l'aile. Lorsque le galet atteint l'extrémité avant de la rampe, le bras suiveur force le volet à basculer vers l'avant afin de créer la fente recherchée.

### EXPOSÉ DE L'INVENTION

L'invention a donc pour but de remédier au moins partiellement à l'inconvénient mentionné ci-dessus, relatif aux réalisations de l'art antérieur.

Pour ce faire, l'invention a pour objet une aile d'aéronef comprenant un corps central fixe d'aile, ainsi qu'au moins un volet mobile de bord d'attaque destiné à être déplacé en rotation par rapport audit corps central fixe, selon un axe de rotation de volet,
ladite aile comprenant un dispositif de mise en mouvement du volet mobile de bord d'attaque, ledit dispositif étant équipé :
- d'un premier rail d'entraînement et d'un second rail d'entraînement espacés selon une direction d'envergure de l'aile, chacun comprenant une extrémité avant raccordée au volet mobile ;
- de moyens de mise en mouvement desdits premier et second rails d'entraînement, couplés à ces derniers ;
- de moyens de guidage de chacun desdits premier et second rails d'entraînement, rapportés sur ledit corps central fixe et conçus de manière à contraindre chacun des premier et second rails en déplacement, selon une trajectoire en arc de cercle centrée sur ledit axe de rotation de volet, lorsque ceux-ci sont mis en mouvement par lesdits moyens de mise en mouvement.

Selon l'invention, ledit dispositif de mise en mouvement comprend en outre un rail suiveur s'étendant selon une ligne directrice en arc de cercle centrée sur ledit axe de rotation de volet, ledit rail suiveur étant agencé entre lesdits premier et second rails d'entraînement, et destiné à suivre le déplacement du volet mobile auquel il est raccordé en un point de raccordement de son extrémité avant, ledit point de raccordement étant agencé de sorte qu'un centre de torsion dudit volet mobile de bord d'attaque soit agencé vers l'avant par rapport à une première ligne droite passant par ledit axe de rotation de volet et par ce point de raccordement. En outre, ledit dispositif de mise en mouvement comprend des moyens de guidage dudit rail suiveur, rapportés sur ledit corps central fixe et conçus de manière à contraindre ledit rail suiveur en déplacement de sorte que sa ligne directrice en arc de cercle reste superposées à une trajectoire en arc de cercle centrée sur ledit axe de rotation de volet. De plus, une liaison articulée d'arc parallèle audit axe de rotation de volet est prévue au point de raccordement, entre ledit rail suiveur et le volet mobile.

L'une des particularités de la présente invention réside donc dans l'adjonction du rail suiveur entre les deux rails d'entraînement. Ce rail suiveur est prévu pour suivre le déplacement du volet auquel il est raccordé par le point de raccordement, tout en étant contraint par ses moyens de guidage associés à se déplacer selon une trajectoire en arc de cercle centrée sur l'axe de rotation du volet. Par conséquent, le rail suiveur contraint de la sorte en déplacement permet avantageusement d'appliquer sur le volet mobile un effort orienté vers l'arrière selon la direction de ladite première ligne droite passant par le point de raccordement et l'axe de rotation du volet, cet effort poussant donc le volet à se rapprocher du corps central fixe, et limitant ainsi l'apparition de la fente préjudiciable rencontrée dans l'art antérieur. Plus précisément, en raison de la localisation particulière du point de raccordement mentionnée ci-dessus, par rapport au centre de torsion, l'effort appliqué au volet en ce point par le rail suiveur génère un moment de sens opposé au moment lié à l'effort aérodynamique s'appliquant sur le volet, et à l'origine de la fente précitée. Cela permet donc de limiter voire de supprimer cette fente entre le bord de fuite du volet mobile et le corps central fixe de l'aile, pour de meilleures performances globales, en particulier durant les phases de décollage de l'aéronef durant lesquelles le volet mobile de bord d'attaque occupe sa position intermédiaire de décollage.

En d'autres termes, l'effort appliqué au volet par le rail suiveur génère un moment dit compensateur s'opposant au moment lié à l'effort aérodynamique s'exerçant sur le volet, grâce en particulier au guidage forcé du rail suiveur selon une trajectoire en arc de cercle, contrastant par exemple avec la simple liaison pivot rencontrée dans le document EP 0 728 101 entre le galet à l'extrémité arrière du bras suiveur, et la rampe logeant le galet.

De préférence, le rail suiveur est placé environ à mi-distance entre les deux rails d'entraînement, selon la direction d'envergure, afin d'appliquer le moment compensateur à l'endroit du volet mobile où le risque d'apparition de la fente est le plus élevé. Néanmoins, il pourrait être prévu plusieurs rails suiveurs entre deux rails d'entraînement directement consécutifs, sans sortir du cadre de l'invention.

De préférence, lesdits moyens de guidage dudit rail suiveur comprennent au moins deux systèmes de guidage simultanément en contact avec ledit rail suiveur, et espacés l'un de l'autre selon la longueur de ce rail suiveur, cette disposition étant en effet particulièrement bien adaptée pour forcer le rail suiveur en déplacement selon une trajectoire en arc de cercle. Ces moyens de guidage présentent donc une forme sensiblement identique ou similaire à celle habituellement adoptée pour le guidage des rails d'entraînement. A cet égard, lesdits systèmes de guidage sont préférentiellement des systèmes à galet(s).

De préférence, en coupe orthogonale à ladite direction d'envergure, ledit point de raccordement se trouve agencé en arrière par rapport à la projection orthogonale (PCt1) dudit centre de torsion sur ladite première ligne droite.

Toujours de manière préférentielle, en coupe orthogonale à ladite direction d'envergure, ledit point de raccordement se trouve agencé en arrière par rapport à la projection orthogonale (PCt2) dudit centre de torsion sur une seconde ligne droite passant par ledit point de raccordement et orthogonale à ladite première ligne droite. Dans cette configuration, un rapport entre la distance séparant ledit point de projection (PCt2) et ledit point de raccordement, et la longueur d'une corde du volet mobile, est préférentiellement compris entre 0,15 et 0,3. Cet intervalle assure un moment compensateur d'intensité appropriée, permettant un appui optimal du bord de fuite du volet mobile sur le corps central fixe de l'aile, au droit du rail suiveur, et en particulier durant les phases de décollage de l'aéronef.

De préférence, ladite première ligne droite est orthogonale à ladite corde du volet mobile, même si cela pourrait en être autrement, sans sortir du cadre de l'invention.

De préférence, chacun desdits rail suiveur, premier et second rails d'entraînement sont en forme générale d'arc de cercle, de préférence centrés sur l'axe de rotation du volet. Ainsi, chaque rail s'étend selon une ligne directrice en arc de cercle qui se déplace en restant superposée à la trajectoire en arc de cercle de ce rail, lors d'un mouvement de ce dernier.

Toujours de manière préférentielle, il est possible de faire en sorte que le rayon dudit rail suiveur soit différent du rayon desdits premier et second rails d'entraînement. De la même façon, il est possible de faire en sorte que le rayon de la trajectoire en arc de cercle imposée au rail suiveur soit différent du rayon de la trajectoire en arc de cercle imposée aux rails d'entraînement. Cela permet avantageusement de facilement adapter la conception de l'aile en fonction de l'encombrement disponible.

Par ailleurs, l'invention a également pour objet un aéronef comprenant au moins une aile telle que décrite ci-dessus.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective d'un aéronef ;
- la figure 2 représente une vue schématique et partielle en coupe d'une aile d'aéronef selon la présente invention, munie d'un volet mobile de bord d'attaque ;
- la figure 3 représente une vue partielle en perspective du volet mobile de bord d'attaque montré sur la figure 2 ;
- la figure 4 représente une vue en coupe prise le long de la ligne IV-IV de la figure 3 ; et
- la figure 5 représente une vue en coupe prise le long de la ligne V-V de la figure 3.

### EXPOSÉ DÉTAILLÉ DE MODES DE RÉALISATION PRÉFÉRÉS

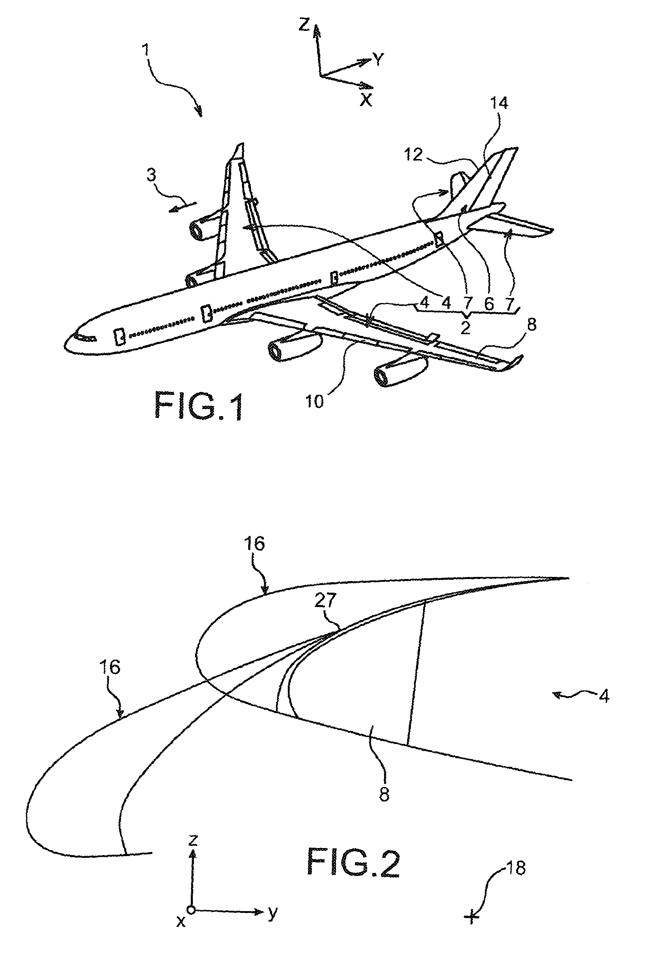

En référence à la figure 1, on voit un aéronef 1 disposant d'une voilure 2 constituée d'une pluralité d'éléments de voilure, encore appelés surfaces aérodynamiques portantes.

Dans toute la description qui va suivre, les termes « avant » et « arrière » sont à considérer par rapport à une direction d'avancement de l'aéronef rencontrée suite à la poussée exercée par les moteurs de l'aéronef, cette direction étant représentée schématiquement par la flèche 3.

Parmi les éléments de voilure de l'aéronef 1, on compte deux ailes principales, dites ailes 4, une dérive verticale 6, ainsi que deux empennages horizontaux 7 situés à l'arrière de cet aéronef.

En ce qui concerne les ailes 4, comme évoqué ci-dessus, celles-ci comprennent chacune un corps central fixe d'aile 8, également dénommé portion centrale principale, ce corps constituant quasiment l'intégralité de l'aile, et étant situé en arrière d'un bord d'attaque 10. Ici encore, dans toute la description qui va suivre, par convention, on appelle X la direction longitudinale de bord d'attaque, ou encore direction d'envergure, Y la direction orientée transversalement par rapport au bord d'attaque 10 de l'aile 4, et Z la direction verticale, ces trois directions étant orthogonales entre-elles.

Ainsi, comme le montre schématiquement la figure 2, c'est effectivement le bord d'attaque de chacune des deux ailes 4 qui peut être équipé d'au moins un volet mobile de bord d'attaque 16, chacun destiné à être relié au corps 8 par des moyens qui seront détaillés ci-après. Sur cette figure 2, on peut voir que le volet mobile de bord d'attaque 16, représenté schématiquement, peut occuper une position rétractée/rentrée dans laquelle il épouse la partie avant du corps central fixe 8 de l'aile 4. Dans un tel cas, le volet mobile 16 se trouve dans sa position la plus arrière. De plus, le volet mobile 16 peut occuper une position entièrement déployée où il est à distance vers l'avant du corps central fixe 8, cette position entièrement déployée étant adoptée en particulier durant les phases d'atterrissage afin d'augmenter la portance à faible ou moyenne vitesse. Ce volet 16 est bien entendu conçu pour être déplacé entre ces deux positions extrêmes, par exemple de manière à lui faire adopter une position intermédiaire de décollage, connue de l'homme du métier.

A titre indicatif, le volet mobile 16 s'étend par exemple sur sensiblement toute la longueur de l'aile 4 concernée, bien entendu selon la direction d'envergure de cette aile 4, ou bien uniquement sur une portion seulement de cette aile, comme cela est le plus courant sur les aéronefs.

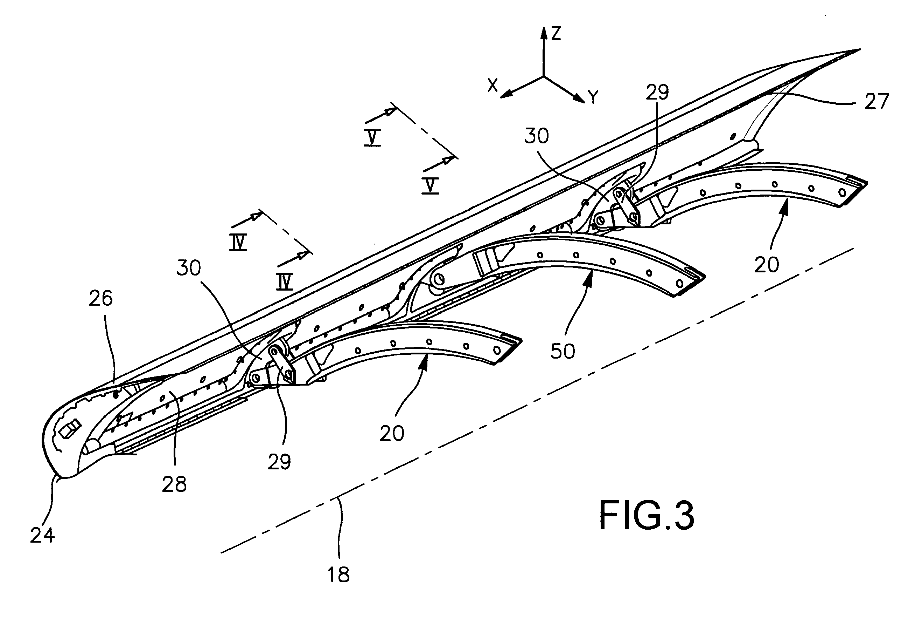

Comme visible sur la figure 3, le volet 16 comporte un revêtement aérodynamique définissant une portion intrados 24 ainsi qu'une portion extrados 26, cette dernière se terminant par un bord de fuite 27 du volet. De plus, il est fermé vers l'arrière par un revêtement de fermeture 28, destiné à épouser le corps fixe d'aile 8 lorsqu'il occupe la position rétractée.

En référence aux figures 3 à 5, il est représenté un dispositif de mise en mouvement du volet mobile de bord d'attaque 16, permettant de faire pivoter ce dernier par rapport au corps 8, selon un axe de rotation 18, entre la position entièrement déployée et la position rétractée.

Le dispositif de mise en mouvement comprend tout d'abord deux rails d'entraînement 20 espacés l'un de l'autre selon la direction d'envergure X, ces deux rails présentant une forme générale courbe ou en arc de cercle connue de l'homme du métier, centrée sur l'axe de rotation 18.

L'extrémité avant de chaque rail d'entraînement 20 est raccordée au volet 16 par une ferrure de volet 30 faisant saillie vers l'arrière à partir du revêtement de fermeture 28, une bielle additionnelle 29 étant agencée entre cette même ferrure 30 et un point plus arrière de l'extrémité avant du rail 20.

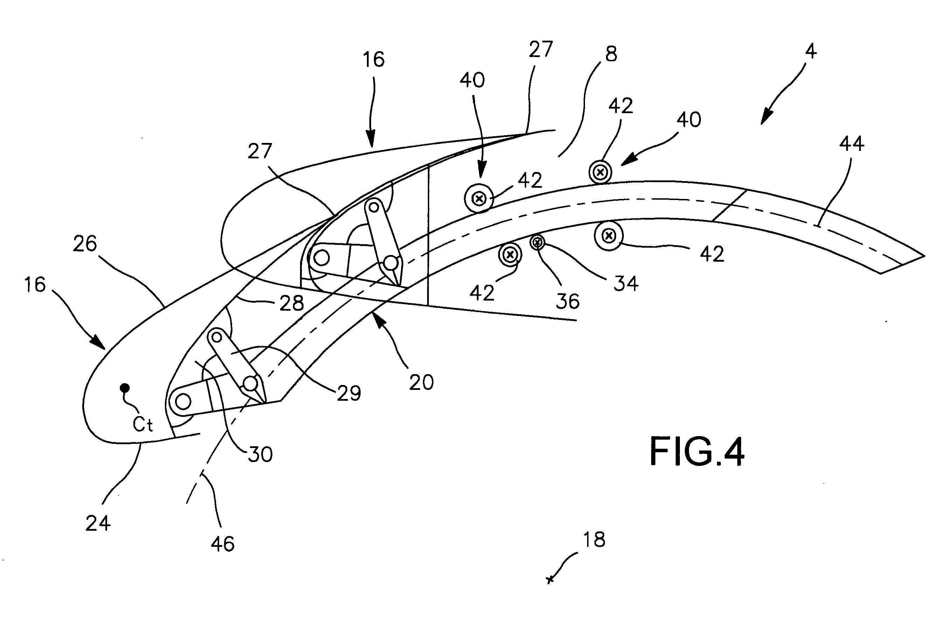

Comme cela est le mieux visible sur la figure 4, il est prévu des moyens de mise en mouvement de ces rails 20, intégrés essentiellement dans la partie avant du corps central 8. Ces moyens de mise en mouvement, également dénommés moyens d'actionnement, peuvent prendre toute forme connue de l'homme du métier, comme par exemple une roue dentée 34 ou similaire commandée par un arbre ou bras rotatif d'actionnement 36 parallèle à l'axe 18, cette roue dentée 34 engrenant avec une crémaillère s'étendant le long du rail d'entraînement associé 20. Alternativement, la roue dentée peut être remplacée par un galet d'entraînement plaquée contre une piste de roulement du rail d'entraînement. Quoi qu'il en soit, il est habituellement fait en sorte qu'un même et unique arbre 36 porte les deux roues dentées / galets coopérant respectivement avec les deux rails d'entraînement 20.

En outre, des moyens de guidage sont associés à chacun des deux rails d'entraînement 20, afin de leur imposer une trajectoire déterminée, conditionnant le mouvement résultant du volet 16. Toujours en référence à la figure 4, pour chaque rail d'entraînement 20, ces moyens de guidage prennent la forme de deux systèmes de guidage 40 simultanément en contact avec le rail 20. Chacun des deux systèmes de guidage 40 présente par exemple deux galets 42 en regard, agencés de part et d'autre du rail, et plus précisément de part et d'autre d'une ligne directrice en arc de cercle 44 le long de laquelle s'étend le rail concerné. Les deux systèmes de guidage 40 sont espacés l'un de l'autre selon la longueur du rail 20, à savoir espacés l'un de l'autre selon la ligne directrice en arc de cercle 44.

Les deux couples de galets 42 libres en rotation sont alors intégrés au corps central fixe 8, et agencés de manière à contraindre le rail 20 en déplacement, selon une trajectoire en arc de cercle 46 centrée sur l'axe de rotation 18 de volet 16, lorsque celui-ci est actionné par la roue dentée 34. Ainsi, lorsque l'arbre 36 est actionné, la roue dentée 34 en rotation génère un déplacement des deux rails d'entraînement 20 autour de l'axe 18, qui entraîne quant à eux une rotation du volet 16 autour de ce même axe. Durant ce déplacement, chacun des deux rails 20 voit sa ligne directrice en arc de cercle 44 se déplacer en superposition par rapport à sa propre trajectoire en arc de cercle 46, ceci étant notamment schématisé par l'identité entre les arcs de cercle 44 et 46 sur la figure 4. Dans le mode de réalisation préféré décrit, les deux rails d'entraînement 20 sont de préférence sensiblement identiques, et superposés dans la direction d'envergure de l'aile.

Le dispositif de mise en mouvement du volet est complété par un mécanisme suiveur interposé entre les deux rails d'entraînement 20, de préférence à mi-distance entre ces derniers, dans la direction d'envergure.

Le mécanisme suiveur comprend tout d'abord un rail suiveur 50, sensiblement parallèle aux rails d'entraînement 20, à savoir mobile dans un plan orthogonal à l'axe de rotation 18 du volet.

L'extrémité avant du rail suiveur 50 est raccordée au volet 16 par une ferrure de volet 52 faisant saillie vers l'arrière à partir du revêtement de fermeture 28, une liaison articulée 54 d'axe parallèle à l'axe de rotation 18 du volet étant prévue entre ces deux éléments. De plus, l'axe de la liaison articulée 54 passe par un point de raccordement P du rail suiveur 50 sur le volet 16.

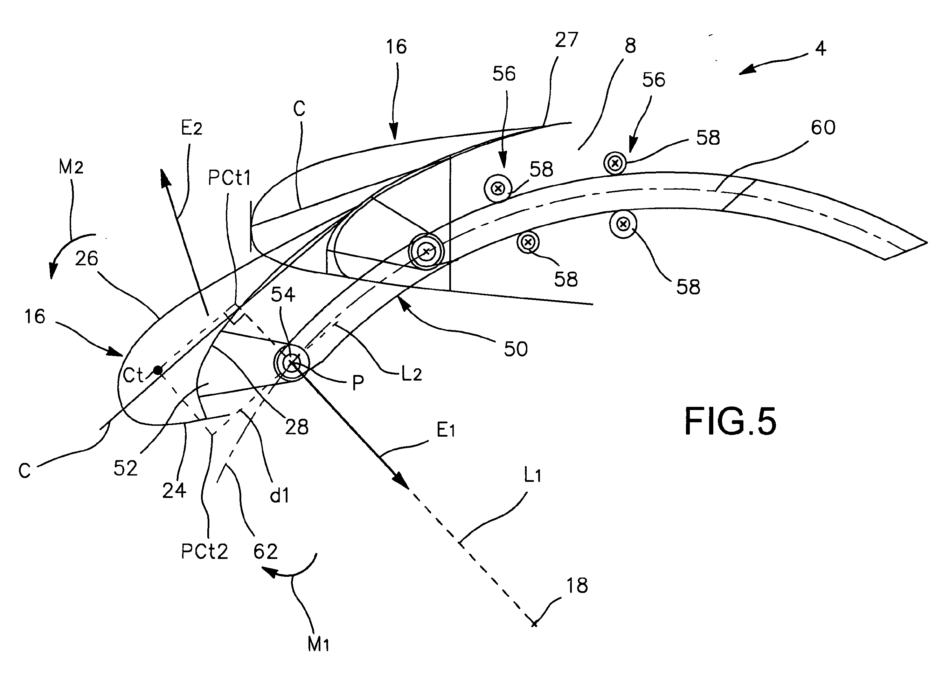

Comme cela est le mieux visible sur la figure 5, des moyens de guidage sont associés au rail suiveur 50, afin de lui imposer une trajectoire déterminée lorsqu'il est mis en mouvement par le déplacement du volet 16 auquel il est raccordé. Ces moyens de guidage prennent la forme de deux systèmes de guidage 56 simultanément en contact avec le rail suiveur 50, et sont donc de conception identique ou similaire à celle adoptée pour chacun des rails d'entraînement 20. Ainsi, chacun des deux systèmes de guidage 56 présente par exemple deux galets 58 en regard, agencés de part et d'autre du rail, et plus précisément de part et d'autre d'une ligne directrice en arc de cercle 60 le long de laquelle s'étend le rail concerné. Les deux systèmes de guidage 56 sont espacés l'un de l'autre selon la longueur du rail 50, à savoir espacés l'un de l'autre selon la ligne directrice en arc de cercle 60.

Les deux couples de galets 58 libres en rotation sont alors intégrés au corps central fixe 8, et agencés de manière à contraindre le rail 50 en déplacement, selon une trajectoire en arc de cercle 62 centrée sur l'axe de rotation 18 de volet, lorsque ce rail 50 suit la rotation du volet imposée par les rails d'entraînement 20. Durant le déplacement de ce rail suiveur 50, celui-ci voit sa ligne directrice en arc de cercle 60 se déplacer en superposition par rapport à sa propre trajectoire en arc de cercle 62, ceci étant notamment schématisé par l'identité entre les arcs de cercle 60 et 62 sur la figure 5.

La courbure du rail suiveur peut être identique ou différente de celle des rails d'entraînement, les lignes directrices 44, 60 restant néanmoins concentriques pour des raisons cinématiques. A cet égard, le fait de pouvoir adopter des rayons différents pour les lignes directrices en arc de cercle 44, 60 offre une liberté très avantageuse pour la conception de l'aile d'aéronef.

Toujours en référence à la figure 5, on peut voir que le point de raccordement P du rail suiveur 50 est agencé de sorte qu'un centre de torsion Ct du volet 16, placé par construction, soit agencé vers l'avant par rapport à une première ligne droite L1 passant par l'axe de rotation 18 et par ce même point P. Ainsi, le rail suiveur 50 contraint en déplacement de la façon exposée ci-dessus applique sur le volet mobile un effort E1 orienté vers l'arrière et vers le bas selon la direction de la première ligne droite L1, passant elle-même à l'arrière du centre de torsion Ct. Cet effort E1 pousse donc la partie du volet située entre les deux rails d'entraînement 20 à se rapprocher du corps central fixe 8, et limite ainsi l'apparition de la fente préjudiciable rencontrée dans l'art antérieur. De plus, l'effort E1 appliqué au volet 16 génère un moment M1 de sens opposé au moment M2 lié à l'effort aérodynamique E2 s'appliquant sur le volet, en un point également situé en arrière du centre de torsion Ct.

Le moment M1 s'exerçant dans le sens des aiguilles d'une montre sur la figure 5, à savoir dans le sens opposé à celui du moment M2 lié à l'effort aérodynamique E2 orienté vers le haut et vers l'avant, permet de rabattre le bord de fuite 27 du volet contre le corps central 8. Ainsi, cela limite voire supprime la fente rencontrée à cet endroit avec les réalisations de l'art antérieur. Il en résulte alors de meilleures performances globales, en particulier durant les phases de décollage de l'aéronef durant lesquelles le volet mobile de bord d'attaque occupe sa position intermédiaire de décollage, correspondant à une position intermédiaire entre les deux positions extrêmes représentées sur la figure 5.

En coupe orthogonale à la direction d'envergure montrée sur la figure 5, le point de raccordement P se trouve agencé en arrière par rapport à la projection orthogonale PCt1 du centre de torsion Ct, sur la première ligne droite L1. De plus, le point de raccordement P se trouve agencé en arrière par rapport à la projection orthogonale PCt2 du centre de torsion Ct sur une seconde ligne droite L2 passant par le point P et orthogonale à la première ligne droite L1.

Dans cette configuration, pour l'obtention d'un moment M1 d'intensité optimale, il est préférentiellement fait en sorte qu'un rapport entre la distance d1 séparant le point de projection PCt2 et le point P selon la ligne L2, et la longueur d'une corde C du volet mobile, est compris entre 0,15 et 0,3. A cet égard, il est noté que dans le mode de réalisation préféré représenté, la corde C, reliant le bord de fuite 27 et le point le plus avant du volet lorsque celui-ci occupe sa position rentrée, est orthogonale à la première ligne droite L1.

Bien entendu, diverses modifications peuvent être apportées par l'homme du métier à l'invention qui vient d'être décrite, uniquement à titre d'exemples non limitatifs.

## Revendications

1. Aile d'aéronef (4) comprenant un corps central fixe d'aile (8), ainsi qu'au moins un volet mobile de bord d'attaque (16) destiné à être déplacé en rotation par rapport audit corps central fixe, selon un axe de rotation de volet (18),
ladite aile comprenant un dispositif de mise en mouvement du volet mobile de bord d'attaque, ledit dispositif étant équipé :
- d'un premier rail d'entraînement (20) et d'un second rail d'entraînement (20) espacés selon une direction d'envergure de l'aile, chacun comprenant une extrémité avant raccordée au volet mobile ;
- de moyens de mise en mouvement (34, 36) desdits premier et second rails d'entraînement (20, 20), couplés à ces derniers ;
- de moyens de guidage (40, 40) de chacun desdits premier et second rails d'entraînement (20, 20), rapportés sur ledit corps central fixe (8) et conçus de manière à contraindre chacun des premier et second rails (20, 20) en déplacement, selon une trajectoire en arc de cercle (46) centrée sur ledit axe de rotation de volet, lorsque ceux-ci sont mis en mouvement par lesdits moyens de mise en mouvement (34, 36),
**caractérisée en ce que** ledit dispositif de mise en mouvement comprend en outre un rail suiveur (50) s'étendant selon une ligne directrice en arc de cercle (60) centrée sur ledit axe de rotation de volet (18), ledit rail suiveur étant agencé entre lesdits premier et second rails d'entraînement (20, 20), et destiné à suivre le déplacement du volet mobile (16) auquel il est raccordé en un point de raccordement (P) de son extrémité avant, ledit point de raccordement (P) étant agencé de sorte qu'un centre de torsion (Ct) dudit volet mobile de bord d'attaque soit agencé vers l'avant par rapport à une première ligne droite (L1) passant par ledit axe de rotation de volet (18) et par ce point de raccordement (P),
**en ce que** ledit dispositif de mise en mouvement comprend en outre des moyens de guidage (56, 56) dudit rail suiveur, rapportés sur ledit corps central fixe (8) et conçus de manière à contraindre ledit rail suiveur (50) en déplacement de sorte que sa ligne directrice en arc de cercle (60) reste superposée à une trajectoire en arc de cercle (62) centrée sur ledit axe de rotation de volet (18),
et **en ce qu'**une liaison articulée (54) d'axe parallèle audit axe de rotation de volet (18) est prévue au point de raccordement (P), entre ledit rail suiveur (50) et le volet mobile (16).

2. Aile d'aéronef selon la revendication 1, **caractérisée en ce que** lesdits moyens de guidage dudit rail suiveur comprennent au moins deux systèmes de guidage (56, 56) simultanément en contact avec ledit rail suiveur (50), et espacés l'un de l'autre selon la longueur de ce rail suiveur.

3. Aile d'aéronef selon la revendication 2, **caractérisée en ce que** lesdits systèmes de guidage sont des systèmes à galet(s) (58).

4. Aile d'aéronef selon l'une quelconque des revendications précédentes, **caractérisée en ce qu'**en coupe orthogonale à ladite direction d'envergure, ledit point de raccordement (P) se trouve agencé en arrière par rapport à la projection orthogonale (PCt1) dudit centre de torsion (Ct) sur ladite première ligne droite (L1).

5. Aile d'aéronef selon l'une quelconque des revendications précédentes, **caractérisée en ce qu'**en coupe orthogonale à ladite direction d'envergure, ledit point de raccordement (P) se trouve agencé en arrière par rapport à la projection orthogonale (PCt2) dudit centre de torsion (Ct) sur une seconde ligne droite (L2) passant par ledit point de raccordement (P) et orthogonale à ladite première ligne droite (L1).

6. Aile d'aéronef selon la revendication 5, **caractérisée en ce qu'**un rapport entre la distance (d1) séparant ledit point de projection (PCt2) et ledit point de raccordement (P), et la longueur d'une corde (C) du volet mobile, est compris entre 0,15 et 0,3.

7. Aile d'aéronef selon la revendication 5 ou la revendication 6, **caractérisée en ce que** ladite première ligne droite (L1) est orthogonale à ladite corde (C) du volet mobile.

8. Aile d'aéronef selon l'une quelconque des revendications précédentes, **caractérisée en ce que** chacun desdits rail suiveur (50), premier et second rails d'entraînement (20, 20) sont en forme générale d'arc de cercle.

9. Aile d'aéronef selon la revendication 8, **caractérisée en ce que** le rayon dudit rail suiveur (50) est différent du rayon desdits premier et second rails d'entraînement (20, 20).

10. Aéronef (1) comprenant au moins une aile (4) selon l'une quelconque des revendications précédentes.

## Claims

1. Aircraft wing (4) comprising a fixed central wing body (8), and at least one leading edge mobile flap (16) designed to be moved in rotation relative to said fixed central body, about an axis of rotation of the flap (18),
said wing comprising a device to move the leading edge mobile flap, said device being fitted with:
- a first drive rail (20) and a second drive rail (20) spaced along the wing span direction, each comprising a forward end connected to the mobile flap;
- means (34, 36) of moving said first and second drive rails (20, 20), coupled to these rails;
- means (40, 40) of guiding each of said first and second drive rails (20, 20), added onto said fixed central body (8) and designed to constrain each of the first and second rails (20, 20) in displacement, along a trajectory along an arc of a circle (46) centred on said axis of rotation of the flap, when these rails are moved by said movement means (34, 36),
**characterised in that** said movement device also comprises a follower rail (50) extending along a guideline following an arc of a circle (60) centred on said flap rotation axis (18), said follower rail being arranged between said first and second drive rails (20, 20), and designed to follow the displacement of the mobile flap (16) to which it is connected at a connection point (P) of its forward end, said connection point (P) being arranged such that a centre of torsion (Ct) of said leading edge mobile flap is located forwards from a first straight line (L1) passing through said flap rotation axis (18) and through this connection point (P),
**in that** said movement device also comprises means of guidance (56, 56) of said follower rail, added onto said fixed central body (8) and designed so as to constrain said follower rail (50) in displacement such that its guideline following the arc of a circle (60) remains superposed on a trajectory following the arc of a circle (62) centred on said flap rotation axis (18), and **in that** an articulate link (54) with axis parallel to said flap rotation axis (18) is provided at the connection point (P), between said follower rail (50) and the mobile flap (16).

2. Aircraft wing according to claim 1, **characterised in that** said guide means of said follower rail comprise at least two guide systems (56, 56) simultaneously in contact with said follower rail (50), and at a spacing from each other along the length of this follower rail.

3. Aircraft wing according to claim 2, **characterised in that** said guide systems are preferably roller systems (58).

4. Aircraft wing according to any one of the previous claims, **characterised in that** in a section orthogonal to said wing span direction, said connection point (P) is arranged aft from the orthogonal projection (PCt1) of said centre of torsion (Ct) on said first straight line (L1).

5. Aircraft wing according to any one of the previous claims, **characterised in that** in a section orthogonal to said wing span direction, said connection point (P) is arranged aft from the orthogonal projection (PCt2) of said centre of torsion (Ct) on a second straight line (L2) passing through said connection point (P) and orthogonal to said first straight line (L1).

6. Aircraft wing according to claim 6, **characterised in that** a ratio between the distance (d1) separating said projection point (PCt2) and said connection point (P), and the length of a chord (C) of the mobile flap, is between 0.15 and 0.3.

7. Aircraft wing according to claim 5 or claim 6, **characterised in that** said first straight line (L1) is orthogonal to said chord (C) of the mobile flap.

8. Aircraft wing according to any one of the previous claim, **characterised in that** each of said follower rails (50), first and second drive rails (20, 20) are in the form of an arc of a circle.

9. Aircraft wing according to claim 8, **characterised in that** the radius of said follower rail (50) is different from the radius of said first and second drive rails (20, 20).

10. Aircraft (1) comprising at least one wing (4) according to any one of the previous claims.

## Patentansprüche

1. Flugzeug-Tragflügel, welcher einen festen Tragflügel-Mittelkörper (8) sowie wenigstens eine bewegliche Klappe (16) an der Vorder-bzw. Stirnseite bzw. am Anströmrand aufweist, die bestimmungsgemäß eine Verstellung mittels Verdrehung relativ gegenüber dem genannten festen Mittelkörper um eine Klappen-Drehachse (18) erfahren kann,
wobei der Tragflügel eine Vorrichtung zum Bewegungsantrieb der beweglichen Klappe am stirn- bzw. anströmseitigen Rand aufweist, die versehen ist mit:
- einer ersten (20) und einer zweiten Mitnahmeschiene (20) in Abstand voneinander in Richtung der Flügel-Spannweite, wobei jede Schiene an ihrem Vorderende mit der beweglichen Klappe verbunden ist;
- Mitteln (34, 36) zum Bewegungsantrieb der genannten ersten und zweiten Mitnahmeschienen (20, 20), mit denen sie gekuppelt sind;
- Führungsmitteln (40, 40) für jede der genannten ersten und zweiten Mitnahmeschienen (20, 20), wobei die Führungsmittel an dem genannten festen Mittelkörper (8) angeordnet und so ausgebildet sind, dass sie jede erste und zweite Schiene (20, 20) bei der Verstellung entlang einer kreisbogenförmigen und um die genannte Drehachse der Klappe zentrierten Bewegungsbahn (46) zwangsführen, wenn diese durch die genannten Bewegungsantriebsmittel (34, 36) in Bewegung gesetzt werden,
**dadurch gekennzeichnet dass** die genannten Bewegungsantriebsmittel des weiteren eine Folgeschiene (50) aufweisen, welche sich längs einer kreisbogenförmigen Leitlinie (60) erstreckt und um die genannte Drehachse (18) der Klappe zentriert ist,
wobei die genannte Folgeschiene zwischen den ersten und zweiten Mitnahmeschienen (20, 20) angeordnet ist und bestimmungsgemäß, der Verstellung der beweglichen Klappe folgt, mit der sie in einem Verbindungspunkt (P) an ihrem vorderen Ende verbunden ist, wobei dieser Verbindungspuinkt (P) so ausgebildet und angeordnet ist, dass ein Torsionszentrum (Ct) der beweglichen Klappe vom stirn-bzw. anströmseitigen Rand relativ gegenüber einer ersten Geraden (L1), weiche durch die Drehachse (18) der Klappe und durch den Verbindungspunkt (P) verläuft, vorwärts verlagert wird,
dass die Bewegungsantriebsvorrichtung des weiteren Führungsmittel (56, 56) für die genannte Folgeschiene umfasst, welche an dem festen Mittelkörper (8) angeordnet und so ausgebildet sind, dass sie die genannte Folgeschiene (50) bei der Verstellung so zwangsführen, dass ihre kreisbogenförmige Leitlinie (60) einer um die Drehachse (18) der Klappe zentrierten kreisbogenförmigen Bahnkurve überlagert bleibt,
und dass eine Gelenkverbindung (54)mit einer zur Drehachse (18) der Klappe parallelen Achse im Verbindungspunkt (P) zwischen der genannten Folgeschiene (50) und der beweglichen Klappe (16) vorgesehen ist.

2. Flugzeug-Tragflügel nach Anspruch 1, **dadurch gekennzeichnet, dass** die genannten Führungsmittel für die Folgeschiene wenigstens zwei gleichzeitig mit der Folgeschiene in Kontakt stehende Führungssysteme (56, 56) in Abstand voneinander entlang der Länge dieser Folgeschiene (50) umfaßt.

3. Flugzeug-Tragflügel nach Anspruch 2, **dadurch gekennzeichnet, dass** die Führungssysteme Rollen- bzw. Walzensysteme (58) sind.

4. Flugzeug-Tragflügel nach einem beliebigen der vorhergehenden Ansprüche, **dadurch gekennzeichnet, dass** der genannte Verbindungspunkt (P) im zur Richtung der Spannweite rechtwinkligen Schnitt sich relativ bezüglich der rechtwinkligen Projektion (PCt1) des genannten Torsionszentrums (Ct) auf die genannte erste Gerade (L1) hinter dieser befindet.

5. Flugzeug-Tragflügel nach einem beliebigen der vorhergehenden Ansprüche, **dadurch gekennzeichnet, dass** im zur Richtung der Spannweite rechtwinkligen Schnitt der genannte Verbindungspunkt (P) relativ bezüglich der rechtwinkligen Projektion (PCt2) des genannten Torsionszentrums (Ct) auf eine zweite Gerade (L2), welche durch den genannten Verbindungspunkt (P) und rechtwinklig zu der genannten ersten Geraden (L1) verläuft, hinter dieser (Projektion (PCt2 )) liegt.

6. Flugzeug-Tragflügel nach Anspruch 5, **dadurch gekennzeichnet, dass** das Verhältnis zwischen der den genannten Projektionspunkt (Pct2) und den genannten Verbindungspunkt (P) trennenden Entfernung einerseits und der Länge einer Sehne (C) der beweflichen Klappe andererseits im Bereich zwischen 0,15 und 0, 3 liegt.

7. Flugzeug-Tragflügel nach Anspruch 5 oder nach Anspruch 6, **dadurch gekennzeichnet, dass** die genannte erste Gerade (L1 rechtwinklig zu der genannten Sehne (C) der beweglichen Klappe ist.

8. Flugzeug-Tragflügel nach einem beliebigen der vorhergehenden Ansprüche, **dadurch gekennzeichnet, dass** die genannten Teile Folgeschiene (50), erste und zweite Mitnahmeschiene (20, 20) sämtlich allgemein Kreisbogenform besitzen.

9. Flugzeug-Tragflügel nach Anspruch 9, **dadurch gekennzeichnet, dass** der Radius der genannten Folgeschiene (50) verschieden von dem Radius der genannten ersten und zweiten Mitnahmeschiene (20, 20) ist.

10. Flugzeug (1) umfassend wenigstens einen Tragflügel (4) nach einem der vorhergehenden Ansprüche.
